# EUROPÄISCHE PATENTANMELDUNG

(11) **EP 0 919 801 A1**
(43) Veröffentlichungstag der Anmeldung: **02.06.1999**
(21) Anmeldenummer: 98250369.0
(22) Anmeldetag: 20.10.1998
(51) Int. Cl.: G01N 13/02

(54) **Kontaktwinkel-Messvorrichtung**

(30) Priorität: 28.11.1997 DE 19754765
(71) Anmelder: Krüss GmbH Wissenschaftliche Laborgeräte, 22453 Hamburg (DE)
(72) Erfinder: Weser, Cornelius, 22453 Hamburg (DE); Friedrich, Bernd, 25474 Hasloh (DE)
(74) Vertreter: UEXKÜLL & STOLBERG

(57) **Zusammenfassung**

Eine Kontaktwinkel-Meßvorrichtung zum Messen des Kontaktwinkels, den ein Tropfen (8) einer Probenflüssigkeit zu der Oberfläche (6) eines Probenkörpers (7) ausbildet, weist eine Kamera (10) auf, die den Übergangsbereich zwischen dem Tropfen (8) und der Oberfläche (6) des Probenkörpers (7) in Seitenansicht abbildet. Die optische Achse (A-A) der Kamera (10) verläuft unter einem Winkel, vorzugsweise senkrecht, zu der Oberfläche (6) des Probenkörpers (7). Der Abbildungstrahlengang ist vor dem Objektiv (12) der Kamera (10) durch eine im meßbereiten Zustand nahe an der Oberfläche (6) des Probenkörpers (7) angeordnete erste Umlenkeinrichtung (14) umgelenkt.

## Beschreibung

Die Erfindung betrifft eine Kontaktwinkel-Meßvorrichtung zum Messen des Kontaktwinkels, den ein Tropfen einer Probenflüssigkeit zu der Oberfläche eines Probenkörpers ausbildet, mit einer Kamera, die den Übergangsbereich zwischen dem Tropfen und der Oberfläche des Probenkörpers in Seitenansicht abbildet.

Das Benetzungsvermögen von Flüssigkeiten auf Festkörpern hat in vielen Bereichen der industriellen Fertigung eine fundamentale Bedeutung. So wird zum Beispiel beim Beschichten oder Lackieren, beim Kleben oder Trennen, beim Schmieren oder Entfetten sowie beim Dispergieren oder Lösen der Prozeß entscheidend durch die Benetzungseigenschaften der beteiligten Stoffsysteme beeinflußt.

Ein Maß für die Benetzungseigenschaften ist die freie Oberflächenenergie (freie Grenzflächenenergie) oder Oberflächenspannung (Grenzflächenspannung), die an der Grenzfläche zwischen einem Festkörper und einer Flüssigkeit, an der Grenzfläche zwischen einer Flüssigkeit und einem Gas oder an der Grenzfläche zwischen einem Festkörper und einem Gas definiert ist. Da der Grenzwinkel, den ein Tropfen einer Probenflüssigkeit zu der Oberfläche eines Probenkörpers ausbildet, von den Oberflächenspannungen an den Grenzflächen zwischen den beteiligten Systemen abhängt, lassen sich Werte für die Oberflächenspannung aus Messungen dieses Kontaktwinkels gewinnen. Die der Öffentlichkeit zugängliche Firmenschrift "Die Kontaktwinkelmessung: Ein Verfahren zur Bestimmung der freien Grenzflächenenergie von Festkörpern" von H. Lechner, KRÜSS GmbH SÜD, gibt eine ausführliche Einführung in die Methoden und die Theorie der Kontaktwinkelmessung mit vielen Zitaten zur weiterführenden Literatur. An dieser Stelle ist auch beschrieben, wie die Oberflächenspannung in polare und disperse Anteile zerlegt werden kann und wie sich die einzelnen Oberflächenspannungsanteile durch Messen der Kontaktwinkel bestimmen lassen, die Tropfen verschiedener Probenflüssigkeiten zu der Oberfläche eines zu untersuchenden Probenkörpers ausbilden.

Der Kontaktwinkel zwischen einem Tropfen einer Probenflüssigkeit und der Oberfläche eines Probenkörpers kann mit einem Meßfernrohr ermittelt werden. Für den industriellen Bereich wurden Kontaktwinkel-Meßvorrichtungen entwickelt, die eine Kamera verwenden, um den Übergangsbereich zwischen dem Tropfen und der Oberfläche des Probenkörpers in Seitenansicht abzubilden. Bei einem von der Seite aufgenommenen Bild des Tropfens kann ohne größere Probleme an die Kontur des Tropfens eine Tangente angepaßt werden, und zwar in dem Punkt, wo die Tropfenkontur die Oberfläche berührt. Die Steigung dieser Tangente liefert den zu bestimmenden Kontaktwinkel. Damit die Messung genau ist, muß die Kamera möglichst genau auf die Seite des Tropfens blicken, was bedeutet, daß die optische Achse der Kamera praktisch über die Oberfläche des vorzugsweise horizontal ausgerichteten Probenkörpers verläuft. Derartige Kontaktwinkel-Meßvorrichtungen sind zum Beispiel in den Produktinformationsschriften "Kontaktwinkel-Meßgerät G10" und "Kontaktwinkel-Meßsystem G2" der KRÜSS GmbH beschrieben. Während das Kontaktwinkel-Meßgerät G10 mit einem Goniometer-Meßfernrohr mit horizontal verlaufender optischer Achse ausgerüstet ist, ist das Kontaktwinkel-Meßsystem G2 weitgehend automatisiert und weist eine Videokamera mit horizontal verlaufender optischer Achse, eine der Videokamera gegenüberliegende Beleuchtungseinrichtung für den Probentropfen, ein Dosiersystem zum Aufsetzen von Probenflüssigkeitstropfen auf die Oberfläche des zu untersuchenden Probenkörpers und ein Bildauswertesystem auf, das den Kontaktwinkel aus der von der Videokamera aufgenommenen Tropfenkontur ermittelt.

Die vorbekannten Kontaktwinkel-Meßvorrichtungen eignen sich nicht zur Untersuchung von großen Probenkörpern, wie zum Beispiel von Glasscheiben, Karosserieblechen, Drucktrommeln und 300mm-Wafern. Es ist zwar denkbar, eine herkömmliche Kontaktwinkel-Meßvorrichtung so groß zu konzipieren, daß ein derartiger Probenkörper in die Meßvorrichtung hineinpaßt, wobei sich das Objektiv der für die Bildaufnahme verwendeten Kamera jenseits des Randes des Probenkörpers befinden muß, damit die horizontal ausgerichtete Kamera einen Tropfen einer Probenflüssigkeit von der Seite her aufnehmen kann. Da bei großen Probenkörpern die Benetzungseigenschaften an verschiedenen Stellen der Oberfläche untersucht werden müssen, kann der Abstand zwischen dem Tropfen und dem Objektiv der Kamera so groß werden, daß ein Objektiv mit sehr langer Brennweite eingesetzt werden muß, das seinerseits teuer und nicht handelsüblich ist. Außerdem muß die Kamera für jeden Tropfen, der einen anderen Abstand zum Objektiv hat, neu fokussiert werden. Nachteilig ist auch etwaiger Staub, der sich zwischen dem zu untersuchenden Tropfen und dem Objektiv auf der Oberfläche des Probenkörpers angesammelt hat, da er in Blickrichtung der Kamera liegt und folglich (weitgehend unscharf) abgebildet wird.

Zur Bestimmung der freien Oberflächenenergie kann es ferner erforderlich sein, in unmittelbarer Nachbarschaft mehrere Kontaktwinkel mit unterschiedlich polaren Flüssigkeiten zu messen, um für diesen Bereich eine Oberflächenenergie berechnen zu können. Soll jetzt über eine größere Fläche die freie Oberflächenenergie ortsabhängig bestimmt werden, um z.B. ein Oberflächenenergie-Profil zu erhalten, werden zwangsläufig vor oder hinter dem aktuell zu vermessenden Tropfen andere Tropfen liegen, die bei Verwendung einer der vorbekannten Kontaktwinkel-Meßvorrichtungen die Abbildung des aktuellen Tropfens verhindern. Bei konkav gewölbten Oberflächen oder auch bei Oberflächen mit Erhebungen im Vorder- oder Hintergrund können die vorbekannten Kontaktwinkel-Meßvorrichtungen überhaupt nicht eingesetzt werden.

Es ist Aufgabe der Erfindung, eine Möglichkeit zu schaffen, eine Kontaktwinkel-Meßvorrichtung zum Messen des Kontaktwinkels, den ein Tropfen einer Probenflüssigkeit zu der Oberfläche eines Probenkörpers ausbildet, auch bei großflächigen Probenkörpern anzuwenden, wobei es auch möglich sein soll, mehrere oder viele Tropfen in relativer Nähe zueinander zur Bestimmung der freien Oberflächenenergie zu vermessen.

Diese Aufgabe wird gelöst durch eine Kontaktwinkel-Meßvorrichtung mit den Merkmalen des Anspruchs 1 und durch ein Verfahren zum Messen des Kontaktwinkels unter Verwendung einer derartigen Kontaktwinkel-Meßvorrichtung mit den Merkmalen des Anspruchs 16. Vorteilhafte Ausgestaltungen der Erfindung ergeben sich aus den abhängigen Ansprüchen.

Die erfindungsgemäße Kontaktwinkel-Meßvorrichtung dient zum Messen des Kontaktwinkels, den ein Tropfen einer Probenflüssigkeit zu der vorzugsweise horizontal ausgerichteten Oberfläche eines Probenkörpers ausbildet. Eine Kamera bildet den Übergangsbereich zwischen dem Tropfen und der Oberfläche des Probenkörpers in Seitenansicht ab. Die optische Achse der Kamera verläuft unter einem Winkel, vorzugsweise senkrecht, zu der Oberfläche des Probenkörpers. Der Abbildungsstrahlengang ist vor dem Objektiv der Kamera durch eine im meßbereiten Zustand nahe an der Oberfläche des Probenkörpers angeordnete erste Umlenkeinrichtung umgelenkt. Die erste Umlenkeinrichtung ermöglicht es, daß die Kamera den Übergangsbereich zwischen dem Tropfen und der Oberfläche des Probenkörpers in Seitenansicht aufnehmen kann, obwohl die optische Achse der Kamera nicht parallel zu der Oberfläche des Probenkörpers ausgerichtet ist, wie es bei den vorbekannten Kontaktwinkel-Meßvorrichtungen der Fall ist.

Der Begriff "Kamera" ist ganz allgemein zu verstehen. Die Kamera kann eine Kamera für stehende Bilder sein, die auf Filmmaterial oder elektronisch (z.B. CCD) aufgenommen werden. Bevorzugt ist eine Videokamera, die vorzugsweise mit einem CCD-Chip ausgerüstet ist. Denkbar ist es aber auch, anstelle der Kamera ein Meßfernrohr zu verwenden, da nicht die Art der Bilderfassung, sondern der Abbildungsstrahlengang vor dem Objektiv erfindungswesentlich ist.

Die erfindungsgemäße Kontaktwinkel-Meßvorrichtung kann wegen der Ausrichtung der optischen Achse der Kamera von oben an eine zu untersuchende Probenoberfläche herangeführt werden. Der Größe des Probenkörpers sind daher keine Grenzen gesetzt. Das Objektiv der Kamera braucht keine extrem lange Brennweite im Makrobereich zu haben, um den Tropfen einer Probenflüssigkeit abzubilden, da der Abstand zwischen dem Tropfen und der ersten Umlenkeinrichtung plus der Abstand zwischen der ersten Umlenkeinrichtung und dem Objektiv relativ gering ist. Wegen des geringen Abstandes zwischen dem Tropfen und der ersten Umlenkeinrichtung blickt die Kamera nur über eine kurze Strecke dicht über die Oberfläche des Probenkörpers, also über eine Strecke, die keine Hindernisse wie andere Tropfen oder Erhebungen hat (und auf der sich auch kaum soviel Staub ansammeln wird, daß er bei der Bildgewinnung stört). Die erfindungsgemäße Kontaktwinkel-Meßvorrichtung kann in kompakter Bauweise ausgeführt werden, ist unkritisch in der Anwendung und universell einsetzbar.

In einer bevorzugten Ausführungsform der Erfindung weist die erste Umlenkeinrichtung ein totalreflektierendes Prisma auf. Vorzugsweise schneidet die Kante zwischen der totalreflektierenden Seitenfläche des Prismas und der im meßbereiten Zustand dem Tropfen zugewandten Seitenfläche des Prismas die optische Achse der Kamera oder verläuft in deren Nähe. Bei dieser Anordnung des Prismas trifft die optische Achse der Kamera nicht mitten auf die totalreflektierende Seitenfläche des Prismas, so daß nur ein Teil der Objektivöffnung für die Abbildung ausgenutzt wird. Andererseits verläuft bei einer derartigen Geometrie der Abbildungsstrahlengang zwischen dem Tropfen und dem Prisma nur unter geringen Winkeln zu der Oberfläche des Probenkörpers, so daß der Übergangsbereich zwischen dem Tropfen und der Oberfläche weitgehend exakt von der Seite abgebildet wird, wie es für eine genaue Bestimmung des Kontaktwinkels erforderlich ist. Wenn die angesprochene Kante des Prismas die optische Achse der Kamera schneidet, wird etwa die Hälfte der Lichtstärke des Objektivs ausgenutzt.

Bei einer bevorzugten Ausführungsform weist die Kontaktwinkel-Meßvorrichtung eine Beleuchtungseinrichtung zur seitlichen Beleuchtung des Übergangsbereichs zwischen dem Tropfen und der Oberfläche des Probenkörpers auf, wobei der Beleuchtungsstrahlengang zwischen der Lichtquelle der Beleuchtungseinrichtung und dem Tropfen durch eine im meßbereiten Zustand nahe an der Oberfläche des Probenkörpers angeordnete zweite Umlenkeinrichtung, die vorzugsweise ein Prisma aufweist, umgelenkt ist. Vorzugsweise ist die erste Umlenkeinrichtung gegenüber der zweiten Umlenkeinrichtung angeordnet, so daß sich im meßbereiten Zustand der Tropfen zwischen der ersten Umlenkeinrichtung und der zweiten Umlenkeinrichtung befindet. Bei dieser Ausgestaltung ist, ähnlich wie der Abbildungsstrahlengang, auch der Beleuchtungsstrahlengang umgelenkt, so daß einerseits für die Lichtquelle genügend Raum zur Verfügung steht und andererseits eine Beleuchtung des Übergangsbereichs zwischen dem Tropfen und der Oberfläche des Probenkörpers von der Seite her erreicht wird, wie es für eine genaue Bestimmung des Kontaktwinkels erforderlich ist.

Vorzugsweise weist die Lichtquelle der Beleuchtungseinrichtung eine Leuchtstoffröhre, zum Beispiel eine Neonröhre, auf. Als Alternativen sind aber auch z.B. eine Lichtquelle mit einer Glühwendel oder eine Leuchtdiode denkbar, wobei es vorteilhaft ist, zwischen der Lichtquelle und der zweiten Umlenkeinrichtung einen Kondensor vorzusehen.

In einer bevorzugten Ausführungsform hat die Kontaktwinkel-Meßvorrichtung mindestens eine Dosierkanüle zum Aufbringen eines Tropfens einer Probenflüssigkeit auf die Oberfläche des Probenkörpers. Vorzugsweise steht die Dosierkanüle mit einer an einen Vorratsbehälter für die Probenflüssigkeit angeschlossenen Dosierpumpe in Wirkverbindung. Ferner kann ein Antrieb für die Dosierkanüle vorgesehen sein, der dazu eingerichtet ist, das der im meßbereiten Zustand der Oberfläche des Probenkörpers gegenüberliegende Ende der Dosierkanüle senkrecht und/oder parallel zu der Oberfläche des Probenkörpers zu bewegen. Wenn verschiedene Probenflüssigkeiten verwendet werden, kann es vorteilhaft sein, wenn für jede der Probenflüssigkeiten eine eigene Dosierkanüle zur Verfügung steht, in die jeweils mittels einer Pumpe die entsprechende Probenflüssigkeit aus einem Vorratsbehälter eingeführt werden kann. Die Leitungen und Ventile zur Verbindung der Vorratsbehälter und der einen Pumpe oder mehreren Pumpen mit den Dosierkanülen sollten so angeordnet sein, daß jede der Probenflüssigkeiten nicht durch andere Probenflüssigkeiten verunreinigt werden kann.

Mit Hilfe einer Dosierkanüle ist es möglich, von oben her einen Tropfen einer Probenflüssigkeit auf die Oberfläche des Probenkörpers aufzubringen. Dabei sind verschiedene Techniken denkbar. Der Tropfen kann zum Beispiel abgesetzt werden, wobei das untere Ende der Dosierkanüle einen größeren Abstand zu der Oberfläche hat als die Höhe des Tropfens oder wonach die Dosierkanüle mit Hilfe des Antriebs soweit nach oben zurückgezogen wird, daß dieser ausreichend große Abstand eingehalten wird. Bei einer anderen Technik kann die Dosierkanüle mit ihrem Endbereich eine zeitlang in den Tropfen eintauchen, so daß ständig Probenflüssigkeit in den Tropfen nachgeliefert wird und sich der Tropfen demzufolge vergrößert, was von der Kamera aufgenommen werden kann, um dynamische Größen zu messen.

Vorzugsweise hat die Kontaktwinkel-Meßvorrichtung ein Gehäuse, in dem bzw. an dem die Kamera, die erste Umlenkeinrichtung und gegebenenfalls die Beleuchtungseinrichtung, die zweite Umlenkeinrichtung und/oder die mindestens eine Dosierkanüle mit den der Dosierkanüle zugeordneten Einrichtungen als Meßkopf integriert sind. Bei einer derartigen Ausgestaltung entsteht ein kompakter Meßkopf, der anwendungsfreundlich und universell einsetzbar ist. Durch die Kapselung in dem Gehäuse kann sogar eine Tauglichkeit für Reinräume erzielt werden, wie es zum Beispiel für die Halbleiterfertigung erforderlich ist. Die einzige Öffnung, aus der eine Substanz aus dem Meßkopf austreten kann, ist in diesem Fall die Öffnung für die Dosierkanüle. Durch eine geeignete Luftabsaugung aus dem Meßkopf läßt sich das Austreten von Substanzen aus dieser Öffnung sogar ganz verhindern.

Der Meßkopf kann stationär an einer Halteeinrichtung montiert oder montierbar sein, so daß ein Probenkörper unter dem Meßkopf bewegbar ist. Eine derartige Anordnung ist zum Beispiel in der Halbleiterfertigung bei Wafern sinnvoll, die mit Hilfe eines Roboters aus einer Kassette geholt und nach Ablauf der Kontaktwinkelmessung wieder dorthin zurückgelegt werden müssen. Da der Roboter so programmiert werden kann, daß er den Probenkörper, d.h. den Wafer, in einer vorgesehenen Schrittfolge unter dem Meßkopf herbewegt, um die Benetzungseigenschaften an verschiedenen Stellen der Oberfläche des Wafers zu bestimmen, erübrigt sich eine aufwendige verfahrbare Halterung für den Meßkopf.

Bei anderen Ausgestaltungen ist der Meßkopf an einer verfahrbaren Führungseinrichtung in einer, in zwei oder in allen drei Raumrichtungen über der Oberfläche eines Probenkörpers bewegbar. Dazu ist der Meßkopf vorzugsweise in einem Portalkran-ähnlichen Gestell mit mehreren Antrieben montiert. Als verfahrbare Führungseinrichtung kann aber auch ein Roboterarm dienen. Diese Anordnung eignet sich für Messungen an stationären Probenkörpern, zum Beispiel bei großen Glasscheiben, Blechteilen oder Drucktrommeln.

Bei einer besonders preisgünstigen Ausführungsform weist der Meßkopf an seiner Unterseite Distanzhalter auf und ist zum Aufsetzen auf die Oberfläche eines Probenkörpers eingerichtet. Bei dieser Ausführungsform, die zum Beispiel bei Gelegenheitsmessungen an ebenen Großobjekten oder auch im mobilen Einsatz sinnvoll ist, wird der Meßkopf von Hand auf die Probe aufgesetzt. Dabei sorgen die Distanzhalter für den erforderlichen Abstand zwischen dem Meßkopf und der Oberfläche des Probenkörpers.

Alle Ausgestaltungen der Erfindung lassen sich besonders rationell einsetzen, wenn die Kontaktwinkel-Meßvorrichtung Einrichtungen zum zumindest teilweise automatischen Steuern und/oder Auswerten des Meßablaufs aufweist.

Bei einem unter Verwendung der erfindungsgemäßen Kontaktwinkel-Meßvorrichtung durchgeführten Verfahren zum Messen des Kontaktwinkels, den ein Tropfen einer Probenflüssigkeit zu der Oberfläche eines Probenkörpers ausbildet, wird ein Tropfen einer Probenflüssigkeit auf die Oberfläche des Probenkörpers aufgebracht, wird der Übergangsbereich zwischen dem Tropfen und der Oberfläche des Probenkörpers in Seitenansicht mit der Kamera der Kontaktwinkel-Meßvorrichtung abgebildet und wird der Kontaktwinkel mittels der von der Kamera erzeugten Abbildung bestimmt.

In einer vollautomatisch durchgeführten Version dieses Verfahrens hat die Kontaktwinkel-Meßvorrichtung einen verfahrbaren Meßkopf mit Dosierkanülen, über die Tropfen von Probenflüssigkeiten an dazu vorgesehenen Stellen auf die Oberfläche eines Probenkörpers aufgesetzt werden. Jeder der Tropfen wird nach dem Aufsetzen von der Kamera abgebildet, die vorzugsweise eine CCD-Videokamera ist.

Die Bestimmung des Kontaktwinkels kann dann mit Hilfe von Bildverarbeitungsprogrammen automatisch erfolgen.

Bei einer bevorzugten Ausführungsform des Verfahrens werden zum Bestimmen polarer und disperser Oberflächenspannungsanteile auf die Oberfläche eines Probenkörpers Tropfen von drei verschiedenen Probenflüssigkeiten in einer triangularen Anordnung aufgebracht, die weiter unten genauer beschrieben ist. Wenn die Kontaktwinkel der Tropfen zu der Oberfläche des Probenkörpers nacheinander gemessen werden, lassen sich für jeden Bereich der Oberfläche die polaren und dispersen Oberflächenspannungsanteile angeben. Hierbei zeigt sich ein besonderer Vorteil der erfindungsgemäßen Kontaktwinkel-Meßvorrichtung. Da die Kamera bei der Kontaktwinkelmessung mit geringem seitlichen Abstand über dem zu untersuchenden Tropfen angeordnet ist, stören die übrigen Tropfen bei der Messung nicht. Bei einem horizontalen Verlauf der Kameraachse, wie es beim Stand der Technik üblich ist, wäre dagegen diese Ausführungsform des Verfahrens nicht möglich, weil sich in Blickrichtung der Kamera zu viele Tropfen befinden würden.

Im folgenden wird die Erfindung anhand von Ausführungsbeispielen näher beschrieben. Die Figuren zeigen in
- Figur 1: eine schematische Schnittansicht des Meßkopfes einer erfindungsgemäßen Kontaktwinkel-Meßvorrichtung über einer zu untersuchenden Probe,
- Figur 2: eine schematische Ansicht einer Ausführungsform der erfindungsgemäßen Kontaktwinkel-Meßvorrichtung, bei der der Meßkopf stationär an einem Stativ montiert ist,
- Figur 3: eine schematische Ansicht einer Ausführungsform der erfindungsgemäßen Kontaktwinkel-Meßvorrichtung, bei der der Meßkopf an einer in allen drei Raumrichtungen verfahrbaren Führungseinrichtung montiert ist,
- Figur 4: eine schematische Ansicht einer Ausführungsform der erfindungsgemäßen Kontaktwinkel-Meßvorrichtung, die zum Aufsetzen auf die Oberfläche eines Probenkörpers eingerichtet ist,
- Figur 5: eine Aufsicht auf einen Probenkörper, der mit Tropfen von drei verschiedenen Probenflüssigkeiten in einer triangularen Anordnung belegt ist, und
- Figur 6: einen vergrößerten Ausschnitt aus Figur 5, über dem die Position des Meßkopfs einer Ausführungsform der erfindungsgemäßen Kontaktwinkel-Meßvorrichtung während der Messung des Kontaktwinkels an einem Tropfen eingezeichnet ist.

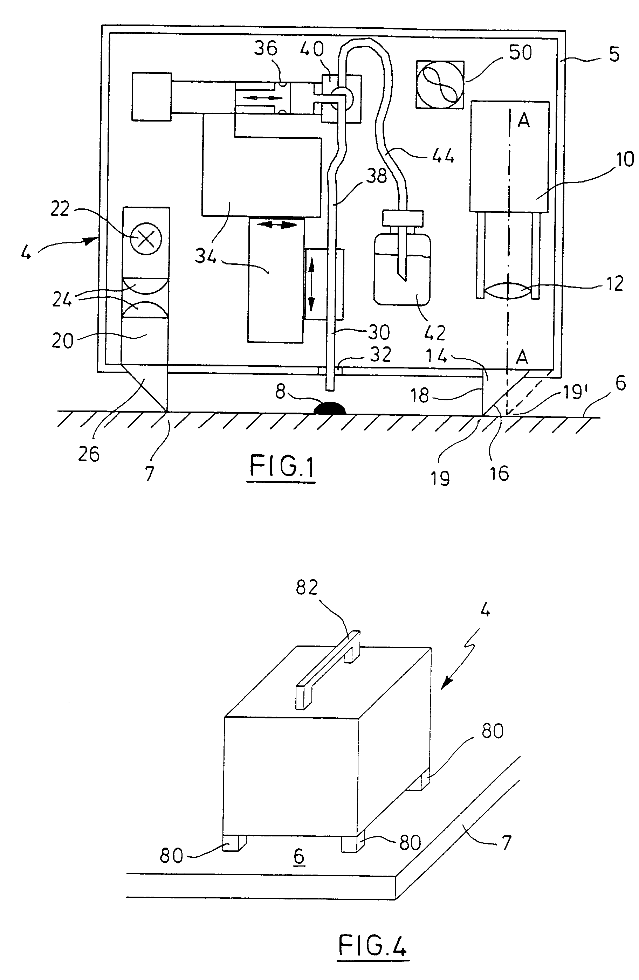

In Figur 1 ist in schematischer Schnittdarstellung ein Meßkopf 4 einer erfindungsgemäßen Kontaktwinkel-Meßvorrichtung gezeigt, bei dem innerhalb eines Gehäuses 5 die nachfolgend im einzelnen erläuterten Komponenten angeordnet sind. Der Meßkopf 4 ist im meßbereiten Zustand, d.h. er befindet sich dicht über der vorzugsweise horizontal ausgerichteten Oberfläche 6 eines Probenkörpers 7. Auf der Oberfläche 6 ist ein Tropfen 8 einer Probenflüssigkeit zu erkennen. Die Kontaktwinkel-Meßvorrichtung dient dazu, den Winkel zu bestimmen, den eine an die Kontur des Tropfens 8 gelegte Tangente zur Oberfläche 6 des Probenkörpers 7 einnimmt. Dabei führt die Tangente durch einen Punkt, der der Kontur des Tropfens 8 und der Oberfläche 6 gemeinsam ist. In der Darstellung nach Figur 1 verläuft die Tangente in einer senkrecht zur Zeichenebene stehenden Ebene. Für eine korrekte Anpassung der Tangente an die Kontur des Tropfens 8 ist es erforderlich, daß der Übergangsbereich zwischen dem Tropfen 8 und der Oberfläche 6 des Probenkörpers 7 in Seitenansicht abgebildet wird, was nach der Darstellung gemäß Figur 1 durch Blick von rechts vorgenommen wird.

Zu diesem Zweck befindet sich in dem Gehäuse 5 eine Kamera 10, die im Ausführungsbeispiel eine CCD-Videokamera ist. Die optische Achse A-A der Kamera 10 verläuft senkrecht zur Oberfläche 6 des Probenkörpers 7. Bei entsprechender Anpassung des Abbildungsstrahlengangs sind jedoch auch von 90° abweichende Winkel zwischen der optischen Achse A-A und der Oberfläche 6 denkbar. Die Kamera 10 hat ein Objektiv 12, das vorzugsweise automatisch fokussierbar ist.

An der unteren Seite des Gehäuses 5 ragt ein totalreflektierendes Prisma 14 vor, das als Umlenkeinrichtung für den Abbildungsstrahlengang der Kamera 10 dient. Das Prisma 14 ermöglicht es, daß der Tropfen 8 von der Kamera 10 in Seitenansicht erfaßt wird. An der Seitenfläche 16 des Prismas 14 findet Totalreflexion statt.

In der Darstellung nach Figur 1 ist das Prisma 14 mitten auf der optischen Achse A-A positioniert, so daß die zwischen der totalreflektierenden Seitenfläche 16 und der dem Tropfen 8 zugewandten Seitenfläche 18 des Prismas 14 ausgebildete Kante 19 zwischen dem Tropfen 8 und der optischen Achse A-A verläuft. Bei dieser Geometrie wird die volle Öffnung des Objektivs 12 ausgenutzt. Allerdings verläuft der Abbildungsstrahlengang zwischen dem Tropfen 8 und der totalreflektierenden Seitenfläche 16 etwas geneigt zur Oberfläche 6, so daß sich keine optimale Seitenansicht des Tropfens 8 ergibt.

Eine alternative Anordnung für das Prisma 14 ist in Figur 1 in gestrichelten Linien dargestellt. Hierbei führt die der Kante 19 entsprechende Kante 19' durch die optische Achse A-A. Dies bewirkt einen flacheren, für eine gute Abbildung der Tropfenkontur günstigeren Abbildungsstrahlengang. Es wird jedoch nur noch etwa die Hälfte der Lichtstärke der Kamera 10 ausgenutzt, da hierbei der Abbildungsstrahlengang nur durch einen Teil der Fläche des Objektivs 12 verläuft. Bei Verwendung einer CCD-Videokamera und bei ausreichend starker Beleuchtung des Tropfens 8 ist das unproblematisch.

Gegenüber der Kamera 10 ist in dem Gehäuse 5 eine Beleuchtungseinrichtung 20 angeordnet. Als Lichtquelle 22 dient in der Darstellung gemäß Figur 1 eine Glühbirne, deren Licht von einem Kondensor 24 gesammelt und über ein Prisma 26 auf den Tropfen 8 gelenkt wird. Das Prisma 26 befindet sich (genau wie das Prisma 14) im meßbereiten Zustand der Kontaktwinkel-Meßvorrichtung nahe an der Oberfläche 6 des Probenkörpers 7 und ermöglicht es, den Tropfen 8 seitlich zu beleuchten. In der Darstellung nach Figur 1 wird der Tropfen 8 von der linken Seite her beleuchtet, so daß seine Kontur gut von der Kamera 10 erfaßt werden kann.

Als Lichtquelle kann zum Beispiel auch eine Leuchtstoffröhre verwendet werden, zum Beispiel eine Neonröhre. In diesem Fall kann der Kondensor 24 entfallen. Für einen günstigen Beleuchtungsstrahlengang ist jedoch auch in diesem Falle eine Umlenkeinrichtung wie das Prisma 26 vorteilhaft.

Damit der Tropfen 8 der Probenflüssigkeit auf die Oberfläche 6 des Probenkörpers 7 aufgebracht werden kann, befindet sich in dem Gehäuse 5 eine Dosierkanüle 30, die durch eine Öffnung 32 an der Unterseite des Gehäuses 5 vorragt. Die Dosierkanüle 30 kann mit Hilfe eines Antriebs 34 bewegt werden. In dem Ausführungsbeispiel gemäß Figur 1 kann sie angehoben und abgesenkt und ferner in der zu der Oberfläche 6 parallelen Ebene verfahren werden, wie in Figur 1 durch die Pfeile im Bereich des Antriebs 34 angedeutet.

Oberhalb des Antriebs 34 befindet sich eine Dosierpumpe 36, die über ein Dreiwegeventil 40 und eine flexible, die Bewegung der Dosierkanüle 30 mitmachende Schlauchleitung 38 mit der Dosierkanüle 30 in Verbindung steht. Der dritte Anschluß des Dreiwegeventils 40 führt zu einem Vorratsbehälter 42 für die Probenflüssigkeit, wobei die Verbindung über eine Schlauchleitung 44 erfolgt.

Bei der in Figur 1 eingezeichneten Stellung des Dreiwegeventils 40 bewegt sich der Kolben der Dosierpumpe 36 nach rechts, um Probenflüssigkeit aus dem Kolbenraum der Dosierpumpe 36 nach unten durch die Dosierkanüle 30 abzugeben. In einem vorangehenden Arbeitstakt ist das Dreiwegeventil 40 so eingestellt, daß durch Verschieben des Kolbens der Dosierpumpe 36 nach links Probenflüssigkeit über die Schlauchleitung 44 aus dem Vorratsbehälter 42 in den Kolbenraum der Dosierpumpe 36 eingesaugt werden kann.

Die Steuerung des Antriebs 34, der Dosierpumpe 36 und des Dreiwegeventils 40 erfolgt vorzugsweise über einen Mikroprozessor.

Wenn über den Meßkopf 4 Tropfen verschiedener Probenflüssigkeiten auf die Oberfläche 6 aufgebracht werden sollen, können mehrere Dosierkanülen vorgesehen sein, die vorzugsweise über eine zugeordnete Dosierpumpe und eine Ventileinrichtung jeweils mit einem eigenen Vorratsbehälter für die Probenflüssigkeit in Verbindung stehen. Die zugehörigen Pumpenräume, Leitungen und Ventile sind vorzugsweise so angeordnet und geschaltet, daß sich die verschiedenen Probenflüssigkeiten nicht gegenseitig verunreinigen können.

In dem Gehäuse 5 befindet sich ferner ein Lüfter 50, der die Abwärme der Lichtquelle 22 fortführt und an der Aufrechterhaltung einer möglichst konstanten Temperatur der Probenflüssigkeit in dem Vorratsbehälter 42 beteiligt ist. Außerdem sorgt der Lüfter 50 im Ausführungsbeispiel für einen Unterdruck an der Öffnung 32, so daß durch die Öffnung 32 keine Verunreinigungen auf den Probenkörper 7 gelangen können.

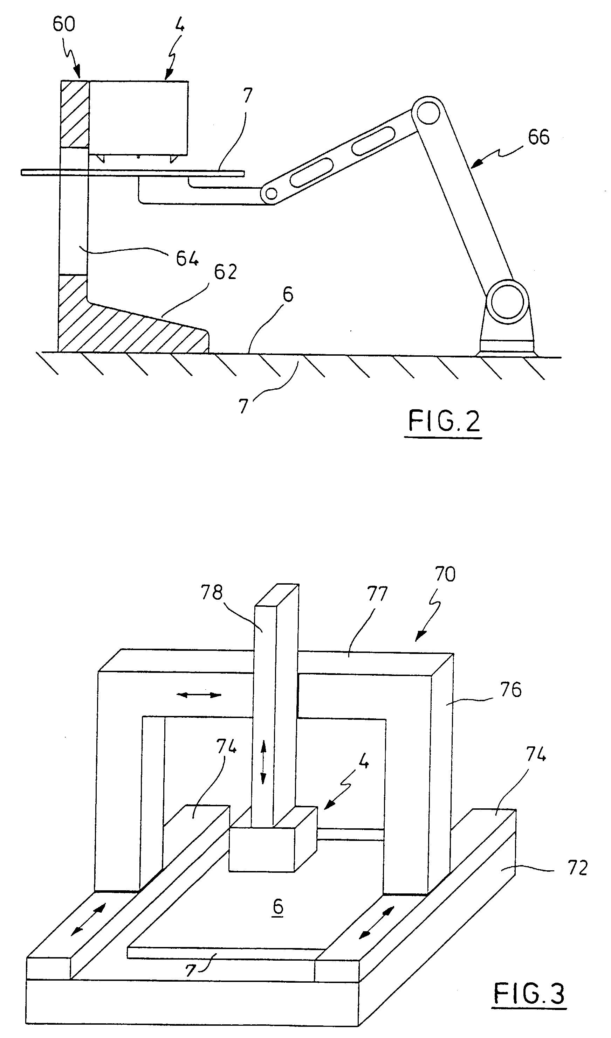

Figur 2 zeigt ein Beispiel für die Montage des Meßkopfs 4. Der Meßkopf 4 ist hierbei an einem stationären Stativ 60 angebracht, dem ein Fuß 62 Standfestigkeit verleiht. Damit Probenkörper 7 verwendet werden können, die größer sind als die Bodenfläche des Meßkopfs 4, ist das Stativ 60 mit einer Öffnung 64 versehen, durch die der Probenkörper 7 hindurchtreten kann, wie in Figur 2 dargestellt. Der Probenkörper 7 wird von einem Roboter 66 gehalten. Der Roboter 66 ist dazu programmiert, den Probenkörper 7 aufzunehmen und unter den Meßkopf 4 zu führen. Ferner bewegt der Roboter 66 den Probenkörper 7 während einer Serie zum Messen der Kontaktwinkel einer Anzahl von Tropfen, die sich bereits vor dem Heranführen des Probenkörpers 7 an den Meßkopf 4 auf der Oberfläche 6 des Probenkörpers 7 befinden oder die während der Durchführung der Messungen von dem Meßkopf 4 auf die Oberfläche 6 aufgebracht werden, wie anhand von Figur 1 beschrieben. Um in eine neue Meßposition zu gelangen, senkt der Roboter 66 zunächst den Probenkörper 7 etwas nach unten und bewegt ihn dann im wesentlichen horizontal unter dem Meßkopf 4. Wenn in bezug auf die Ebene der Oberfläche 6 die Meßposition erreicht ist, hebt der Roboter 66 den Probenkörper 7 soweit an, bis die Prismen 14 und 26 die Oberfläche 6 berühren oder fast berühren.

In Figur 3 ist eine Ausführungsform einer Kontaktwinkel-Meßvorrichtung gezeigt, bei der der Probenkörper 6 stationär ist, während der Meßkopf 4 in allen drei Raumrichtungen bewegt werden kann. Dabei ist der Meßkopf 4 an einer verfahrbaren Führungseinrichtung 70 gelagert. Der Probenkörper 7 liegt auf einer Unterlage 72, die an zwei gegenüberliegenden Seiten Schienen 74 aufweist. Auf den Schienen 74 ist ein Portal 76 mit einem Querträger 77 in Richtung der Pfeile verfahrbar. Entlang des Querträgers 77 kann ein Läufer 78 in Richtung der eingezeichneten Pfeile bewegt werden, der mit dem daran befestigten Meßkopf 4 angehoben und abgesenkt werden kann, wie durch die Pfeile in Figur 3 angedeutet. Die Führungseinrichtung 70 ermöglicht es also, den Meßkopf 4 an jede gewünschte Stelle der Oberfläche 6 heran zubringen.

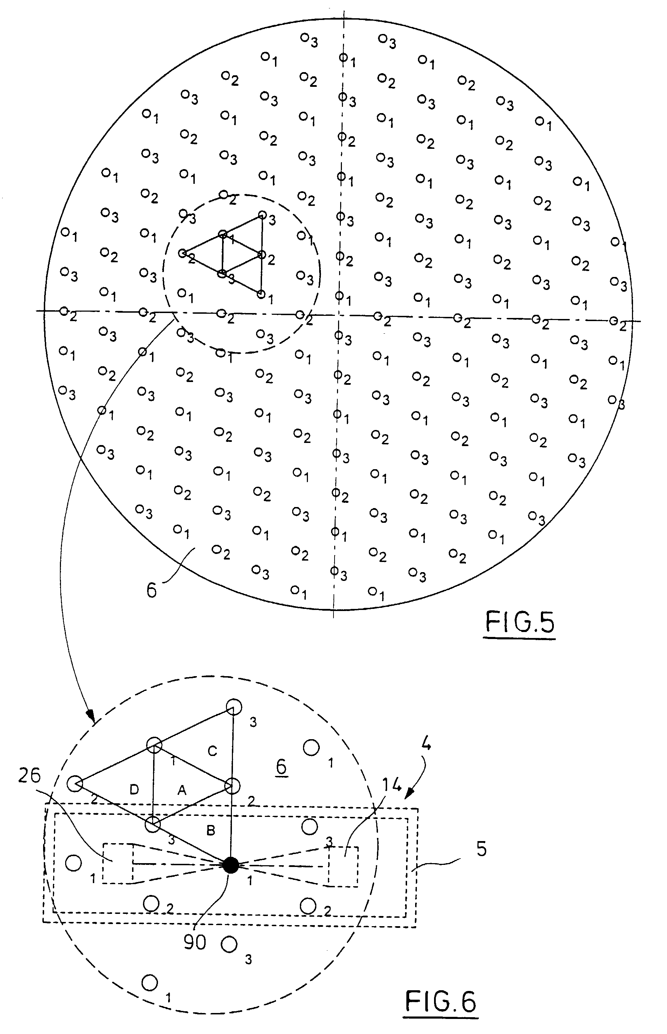

Eine einfache Variante der Kontaktwinkel-Meßvorrichtung zeigt Figur 4. Hier sind an der Unterseite des Meßkopfs 4 vier Distanzhalter 80 montiert, damit der Meßkopf 4 von Hand an einer gewünschten Stelle auf der Oberfläche 6 des Probenkörpers 7 aufgesetzt werden kann. Dies wird durch einen Griff 82 erleichtert. Die Ausgestaltung nach Figur 4 eignet sich besonders für Messungen an ebenen Großobjekten oder im mobilen Einsatz.

Grundsätzlich kann die erfindungsgemäße Kontaktwinkel-Meßvorrichtung für Probenkörper von beliebiger Form verwendet werden. Falls es nicht gewünscht ist, daß der Tropfen einer Probenflüssigkeit während der Messung des Kontaktwinkels wegläuft, sollte der Probenkörper so ausgerichtet sein, daß die an der Stelle des Tropfens an den Probenkörper gelegte Tangentialebene horizontal oder weitgehend horizontal verläuft.

Wie eingangs erwähnt, lassen sich mit Hilfe von Kontaktwinkeln, die an Tropfen von drei verschiedenen, ausgewählten Probenflüssigkeiten gemessen werden, polare und disperse Oberflächenspannungsanteile für einen Probenkörper bestimmen. In Figur 5 ist ein bevorzugtes Schema für eine Anordnung der Tropfen auf der Oberfläche 6 des Probenkörpers gezeigt. Diese triangulare Anordnung erlaubt es, die Oberflächeneigenschaften in vielen Regionen der Oberfläche 6 zu ermitteln. Die Tropfen der drei verschiedenen Probenflüssigkeiten sind jeweils mit 1, 2 oder 3 bezeichnet.

Figur 6 zeigt eine Ausschnittsvergrößerung aus Figur 5. Die drei Ecken der mit A, B, C und D bezeichneten Dreiecke werden jeweils durch Tropfen der drei verschiedenen Probenflüssigkeiten gebildet. Entsprechend lassen sich durch Messung der Kontaktwinkel an den drei Tropfen an den drei Ecken jedes der Dreiecke die Benetzungseigenschaften der Oberfläche 6 im Bereich jedes dieser Dreiecke bestimmen.

In Figur 6 ist ferner der Meßkopf 4 einer Ausführungsform der Kontaktwinkel-Meßvorrichtung in Projektion dargestellt. Es ist ersichtlich, daß im Bereich einer aktuellen Meßposition 90 weder der von dem Prisma 26 umgelenkte Beleuchtungsstrahlengang noch der von dem Prisma 14 umgelenkte Abbildungstrahlengang durch benachbarte Tropfen beeinträchtigt werden.

## Patentansprüche

1. Kontaktwinkel-Meßvorrichtung zum Messen des Kontaktwinkels, den ein Tropfen (8) einer Probenflüssigkeit zu der Oberfläche (6) eines Probenkörpers (7) ausbildet, mit einer Kamera (10), die den Übergangsbereich zwischen dem Tropfen (8) und der Oberfläche (6) des Probenkörpers (7) in Seitenansicht abbildet, dadurch gekennzeichnet, daß die optische Achse (A-A) der Kamera (10) unter einem Winkel, vorzugsweise senkrecht, zu der Oberfläche (6) des Probenkörpers (7) verläuft, wobei der Abbildungsstrahlengang vor dem Objektiv (12) der Kamera (10) durch eine im meßbereiten Zustand nahe an der Oberfläche (6) des Probenkörpers (7) angeordnete erste Umlenkeinrichtung (14) umgelenkt ist.

2. Kontaktwinkel-Meßvorrichtung nach Anspruch 1, dadurch gekennzeichnet, daß die erste Umlenkeinrichtung ein totalreflektierendes Prisma (14) aufweist.

3. Kontaktwinkel-Meßvorrichtung nach Anspruch 2, dadurch gekennzeichnet, daß die Kante (19) zwischen der totalreflektierenden Seitenfläche (16) des Prismas (14) und der im meßbereiten Zustand dem Tropfen (8) zugewandten Seitenfläche (18) des Prismas (14) die optische Achse (A-A) der Kamera (10) schneidet oder in deren Nähe verläuft.

4. Kontaktwinkel-Meßvorrichtung nach einem der Ansprüche 1 bis 3, gekennzeichnet durch eine Beleuchtungseinrichtung (20) zur seitlichen Beleuchtung des Übergangsbereichs zwischen dem Tropfen (8) und der Oberfläche (6) des Probenkörpers (7), wobei der Beleuchtungsstrahlengang zwischen der Lichtquelle (22) der Beleuchtungseinrichtung (20) und dem Tropfen (8) durch eine im meßbereiten Zustand nahe an der Oberfläche (6) des Probenkörpers (7) angeordnete zweite Umlenkeinrichtung (26) umgelenkt ist.

5. Kontaktwinkel-Meßvorrichtung nach Anspruch 4, dadurch gekennzeichnet, daß die zweite Umlenkeinrichtung ein Prisma (26) aufweist.

6. Kontaktwinkel-Meßvorrichtung nach Anspruch 4 oder 5, dadurch gekennzeichnet, daß die erste Umlenkeinrichtung (14) gegenüber der zweiten Umlenkeinrichtung (26) angeordnet ist, so daß sich im meßbereiten Zustand der Tropfen (8) zwischen der ersten Umlenkeinrichtung (14) und der zweiten Umlenkeinrichtung (26) befindet.

7. Kontaktwinkel-Meßvorrichtung nach einem der Ansprüche 4 bis 6, dadurch gekennzeichnet, daß die Lichtquelle der Beleuchtungseinrichtung (20) eine Leuchtstoffröhre aufweist.

8. Kontaktwinkel-Meßvorrichtung nach einem der Ansprüche 1 bis 7, gekennzeichnet durch mindestens eine Dosierkanüle (30) zum Aufbringen eines Tropfens (8) einer Probenflüssigkeit auf die Oberfläche (6) des Probenkörpers (7).

9. Kontaktwinkel-Meßvorrichtung nach Anspruch 8, dadurch gekennzeichnet, daß die Dosierkanüle (30) mit einer an einen Vorratsbehälter (42) für die Probenflüssigkeit angeschlossenen Dosierpumpe (36) in Wirkverbindung steht.

10. Kontaktwinkel-Meßvorrichtung nach Anspruch 8 oder 9, gekennzeichnet durch einen Antrieb (34) für die Dosierkanüle (30), der dazu eingerichtet ist, das der im meßbereiten Zustand der Oberfläche (6) des Probenkörpers (7) gegenüberliegende Ende der Dosierkanüle (30) senkrecht und/oder parallel zu der Oberfläche (6) des Probenkörpers (7) zu bewegen.

11. Kontaktwinkel-Meßvorrichtung nach einem der Ansprüche 1 bis 10, gekennzeichnet durch ein Gehäuse (5), in dem bzw. an dem die Kamera (10), die erste Umlenkeinrichtung (14) und gegebenenfalls die Beleuchtungseinrichtung (20), die zweite Umlenkeinrichtung (26) und/oder die mindestens eine Dosierkanüle (30) mit den der Dosierkanüle (30) zugeordneten Einrichtungen (34, 36, 42) als Meßkopf (4) integriert sind.

12. Kontaktwinkel-Meßvorrichtung nach Anspruch 11, dadurch gekennzeichnet, daß der Meßkopf (4) stationär an einer Halteeinrichtung (60) montiert oder montierbar ist, so daß ein Probenkörper (7) unter dem Meßkopf (4) bewegbar ist.

13. Kontaktwinkel-Meßvorrichtung nach Anspruch 11, dadurch gekennzeichnet, daß der Meßkopf (4) an einer verfahrbaren Führungseinrichtung (70) in einer, in zwei oder in allen drei Raumrichtungen über der Oberfläche (6) eines Probenkörpers (7) bewegbar ist.

14. Kontaktwinkel-Meßvorrichtung nach Anspruch 11, dadurch gekennzeichnet, daß der Meßkopf (4) an seiner Unterseite Distanzhalter (80) aufweist und zum Aufsetzen auf die Oberfläche (6) eines Probenkörpers (7) eingerichtet ist.

15. Kontaktwinkel-Meßvorrichtung nach einem der Ansprüche 1 bis 14, gekennzeichnet durch Einrichtungen zum zumindest teilweise automatischen Steuern und/oder Auswerten des Meßablaufs.

16. Verfahren zum Messen des Kontaktwinkels, den ein Tropfen (8) einer Probenflüssigkeit zu der Oberfläche (6) eines Probenkörpers (7) ausbildet, unter Verwendung einer Kontaktwinkel-Meßvorrichtung nach einem der Ansprüche 1 bis 15, mit den Schritten:
- Aufbringen eines Tropfens (8) einer Probenflüssigkeit auf die Oberfläche (6) des Probenkörpers (7),
- Abbilden des Übergangsbereichs zwischen dem Tropfen (8) und der Oberfläche (6) des Probenkörpers (7) in Seitenansicht mit der Kamera (10) der Kontaktwinkel-Meßvorrichtung,
- Bestimmen des Kontaktwinkels mittels der von der Kamera (10) erzeugten Abbildung.

17. Verfahren nach Anspruch 16, dadurch gekennzeichnet, daß zum Bestimmen polarer und disperser Oberflächenspannungsanteile auf die Oberfläche (6) eines Probenkörpers (7) Tropfen (1, 2, 3) von drei verschiedenen Probenflüssigkeiten in einer triangularen Anordnung (Figur 5) aufgebracht werden und daß die Kontaktwinkel der Tropfen (1, 2, 3) zu der Oberfläche (6) des Probenkörpers (7) nacheinander gemessen werden.
